# EUROPEAN PATENT APPLICATION

(11) **EP 4 596 634 A1**
(43) Date of publication of application: **06.08.2025**
(21) Application number: 24154766.0
(22) Date of filing: 30.01.2024
(51) Int. Cl.: C08L 97/00, C08J 5/04, C08L 63/00

(54) **LIGNIN COMPOSITE MATERIAL**

(71) Applicant: Ren Fuel K2B Ipco AB, 102 48 Stockholm (SE)
(72) Inventor: OREBOM, Alexander, 741 45 KNIVSTA (SE); MUNIER, Pierre, 756 60 UPPSALA (SE); SALEH, Alan, 752 20 UPPSALA (SE); SAMEC, Joseph, 113 50 STOCKHOLM (SE)
(74) Representative: Brann AB

(57) **Abstract**

The present invention relates to a resin material obtainable by curing a mixture of lignin, di- or polyepoxide at elevated temperature. Reinforcing agent may be added to prepare composite.

## Description

### FIELD OF INVENTION

The present invention relates to a renewable lignin-based resin and a composite based on the resin.

### BACKGROUND

There is a need for more renewable plastic materials and lignin is a potential polymer to be used. However, a problem with lignin is its lack of miscibility and compatibility with other polymers such as polyolefins. An additional problem with lignin-based materials is that they tend to smell, especially kraft lignin, which limits the use of materials based on or having a high content of lignin.

Lignin is the most available natural polymer next to cellulose. Lignin is found in the cell walls of fibrous plants and woods along with cellulose and hemicellulose. Lignin acts as a matrix material for polysaccharides, micro-fibrils and fibres and provides strength to plant stem. It is a high molecular weight phenolic macromolecule containing three different types of monolignol monomers p-coumaryl alcohol, coniferyl alcohol and sinapyl alcohol.

WO2022/003074 relates to a cured material based on lignin where the lignin is first esterified with a fatty acid where after the lignin is cured using peroxide, oxygen or sulphur.

WO2018/111183 relates to a thermoplastic material comprising esterified lignin and an addition polymer such as a polyolefin. The lignin is esterified using a fatty acid methyl ester.

There is still a need for renewable cured or crosslinked polymeric materials or thermosets with good mechanical properties.

### SUMMARY OF INVENTION

The object of the present invention is to overcome the drawbacks of the prior art and provide a composite material based on lignin with improved mechanical properties. The material may essentially be made of biodegradable materials and has no or very low level of smell or odour.

In a first aspect the present invention relates to a resin material obtainable by
a. Mixing lignin, a di- or polyepoxide compound and preferably a catalyst to prepare a mixture, and
b. Curing the mixture at a curing temperature of at least 60°C.

In a second aspect the present invention relates to a composite material comprising a resin material according to the present invention and a reinforcing agent, wherein the amount of reinforcing agent is 15-50wt% of the total weight of the composite material.

In a third aspect the present invention relates to a method of preparing the composite material according to the present invention wherein the method comprises:
a. Mixing lignin, a di- or polyepoxide compound, fibres and optionally a catalyst to prepare a mixture, and
b. Curing the mixture at a curing temperature of at least 60°C.

### BRIEF DESCRIPTION OF FIGURES

Figure 1, response contour plot of recycled cellulose and biochar, flexural strength.
Figure 2, response contour plot of recycled cellulose and biochar, torque.

### ITEMIZED EMBODIMENTS

In one embodiment according to any of the aspects the lignin is kraft lignin.

In one embodiment according to any of the aspects the diepoxide is selected from ethylene glycol diglycidyl ether (EGDE), glycerol diglycidyl ether (GDE), neopentyl glycol diglycidyl ether (NGDE), resorcinol diglycidyl ether (RDE), bisphenol A diglycidyl ether (BADE) and epoxidized linseed oil (ELO).

In one embodiment according to any of the aspects the amount of di- or polyexpoxide is 30-60wt%, preferably 31-45wt% of the total weight of the resin.

In one embodiment according to any of the aspects the catalyst is selected from 2,4,6-Tris(dimethylaminomethyl)phenol (TDAP), imidazole (Im), 4-(dimethylamino)pyridine (DMAP), tripotassium phosphate, triethylenetetramine, diethylenetriamine, 1,2-Bis(3-aminopropylamino)ethane, piperazine, KOH, NaOH and KAlO₂.

In one embodiment according to any of the aspects the amount of catalyst is 0.1 to 1.5wt%, preferably 0.2 to 0.7 wt%, more preferably 0.3wt% of the total resin material.

In one embodiment according to any of the aspects the reinforcing agent is a fibrous reinforcing agent selected from wood fibre, cellulose, carbon fibre or glass fibre or a mixture of two or more thereof, wherein the cellulose preferably is CTMP, recycled cellulose or hydrophobized CTMP (H-CTMP)

In one embodiment according to any of the aspects the reinforcing agent is a non-fibrous reinforcing agent selected from biochar, carbon black, calcium carbonate and a combination thereof.

In one embodiment according to any of the aspects the reinforcing agent is a mixture of recycled cellulose and biochar, preferably wherein the amount of recycled cellulose is 10-15wt% and the amount of biochar is 20-40wt% of the total weight of the composite material.

In one embodiment according to any of the aspects the reinforcing agent is jute, CTMP or H-CTMP and wherein the total amount of reinforcing agent is 18-25wt%, preferably 20wt%.

In one embodiment according to any of the aspects the lignin in the resin is kraft lignin and wherein the composite material has a reduced odour in comparison with kraft lignin and in comparison with materials containing fatty acid esterified lignin or lignin crosslinked with triglyceride, wherein the odour is determined according to ASTM E679.

In one embodiment according to any of the aspects the lignin in the resin is kraft lignin and wherein a dilution level for odour detection in a bag at 40°C is equal to or less than 1500 as determined according to ASTM E679, preferably equal to or less than 1200, preferably equal to or less than 1000, preferably equal to or less than 800, preferably equal to or less than 600, more preferably equal to or less than 400.

In one embodiment according to any of the aspects the curing is done during at least 5 minutes, preferably at least 10 minutes, preferably 30-150 minutes.

In one embodiment according to any of the aspects the curing is done in a form press and wherein the pressure is preferably at least 0. 1MPa, more preferably at least 0.2MPa.

In one embodiment according to any of the aspects the reinforcing agent is a combination of fibrous and non-fibrous reinforcing agents and wherein the non-fibrous reinforcing agent is mixed with the lignin and the di- or polyepoxide and optionally a catalyst to obtain a pre-mixture and whereafter the fibrous reinforcing agent is mixed with the first mixture to obtain the mixture.

In one embodiment according to any of the aspects wherein the mixing is done at a temperature of 50-120°C, preferably 80-100°C.

All the embodiments may be combined unless stated otherwise.

### DETAILS DESCRIPTION

In the present application the term "lignin" means a polymer comprising coumaryl alcohol, coniferyl alcohol and sinapyl alcohol monomers.

In the present application the terms "weight%" and "wt%" denotes the same thing and are used interchangeably.

When calculating number of repeating units and equivalents one repeating unit of lignin is assumed to be 180 Da. The number of hydroxyl groups in the lignin is measured and calculated by preparing three stock solutions according to prior art and measured using phosphorus NMR (³¹P NMR), Varian 400MHz. On average each monomer unit contains between 1 to 1.17 hydroxyl groups.

Molecular weight in the present application is determined using GPC (Gel Permeation Chromatography) operated at 20°C and at flow rate of 1 ml/min using THF as solvent. Polystyrene Standard RedayCal Set M(p) 250-70000 (16 standards) (Sigma product no: 76552). The columns are Styragel THF (pre-column), Styragel HR 3 THF (7.8x300 mm), Styragel HR 1 THF (7.8x300 mm), Styragel HR 0.5 THF (7.8x300 mm) all from Waters.

### The material

The resin material according to the present invention comprises a di- or polyepoxide and lignin. Lignin is the major part of the resin and the resin is obtainable by mixing lignin, a di- or polyepoxide and preferably a catalyst to prepare a mixture. Curing of the mixture is done at a curing temperature of at least 60°C, preferably at least 100°C. This composite material exhibits good mechanical properties using high lignin content and has a reduced smell in comparison with kraft lignin and in comparison with materials containing fatty acid esterified lignin (WO2018111183) or lignin crosslinked with triglyceride (WO2022/003074).

Di- and polyepoxides are mixed with the lignin at a content of 30-60wt% of the total weight of the resin. In one embodiment the content is 31-45wt%. A non-limiting list of preferred epoxides is ethylene glycol diglycidyl ether (EGDE), glycerol diglycidyl ether (GDE), neopentyl glycol diglycidyl ether (NGDE), resorcinol diglycidyl ether (RDE), bisphenol A diglycidyl ether (BADE) and epoxidized linseed oil (ELO). EGDE, BADE and GDE have shown the most promising strength results as seen in the experiments (Table 1). In one embodiment the di- or polyepoxide is EGDE or BADE and wherein the content is 30-35wt%, preferably 33wt%. In another embodiment the di- or polyepoxide is GDE and wherein the content is 35-45wt%, preferably 40wt%.

A catalyst may also be present in the mixture in order to catalyse the curing reaction and to facilitate a more homogenous curing of the resin. A non-limiting list of preferred catalysts is 2,4,6-Tris(dimethylaminomethyl)phenol (TDAP), imidazole (Im), 4-(dimethylamino)pyridine (DMAP), tripotassium phosphate, triethylenetetramine, diethylenetriamine, 1,2-Bis(3-aminopropylamino)ethane, piperazine, KOH, NaOH and KAlO₂. When preparing the resin DMAP, TDAP and Im are preferred. TDAP and Im have also shown to result in fast curing and very good flexural strength especially when preparing composite materials, especially when using EGDE and GDE. A high flexural strength and a low standard deviation was achieved even after just 10 to 20 minutes when using TDAP, Im and DMAP. Higher amounts of catalyst did not seem to result in higher strength and therefore the catalyst should be added in an amount of 0.1 to 1.5wt%, preferably 0.2 to 0.7 wt%, more preferably 0.3wt% of the total weight of the resin.

Lignin according to the present invention may be any suitable lignin but is preferably selected from Kraft lignin or lignin obtained from black liquor, organosolv lignin, acetosolv, steam exploded lignin or sulfonated lignin, preferably Kraft lignin or lignin obtained from black liquor, more preferably precipitated Kraft lignin, more preferably acid precipitated Kraft lignin or organosolv lignin. Kraft lignin has the advantage of being commercially available in large amounts and organosolv lignin has the advantage of being easy to handle and lacks residues found in Kraft lignin.

The composite material according to the present invention comprise the resin and reinforcing agent. Any suitable reinforcing agent may be used in the present invention and may be fibrous or non-fibrous or a combination thereof. A non-limiting list of preferred fibrous reinforcing agents is wood, jute, cellulose, carbon and glass, or a combination of two or more thereof. Cellulose fibre is preferably selected from chemo-thermomechanical pulp (CTMP), hydrophobized CTMP (H-CTMP), or recycled cellulose. A non-limiting list of preferred non-fibrous reinforcing agents is biochar, carbon black, calcium carbonate and a combination thereof. A preferred combination of fibrous and non-fibrous reinforcing agents is recycled cellulose and biochar. This combination shows good mechanical properties and is biodegradable.

Content of the reinforcing agent may be up to 50wt%, preferably 10-50wt% of the total weight of the composite material. At these contents the strength of the material is believed to be improved, the torque is sufficiently low in order to allow homogenous mixing without using excessive force. When using jute, CTMP or H-CTMP as the reinforcing agent the content of reinforcing agent is preferably 18-25wt%, preferably 20wt% of the total weight of the composite material. Mixtures or combinations of reinforcing agents is also possible. One preferred mixture is recycled cellulose and biochar, and where the content of recycled cellulose is preferably 10-15wt% and the amount of biochar preferably is 20-40wt% of the total weight of the composite material. This means that the amount of lignin in the composite material is as high as around 45-60wt%, which makes this cured material a green alternative to more fossil-based materials. When using less than 15wt% of fibre (e.g. jute or recycled cellulose) and 20-40wt% of biochar, high flexural strength is obtained and sufficiently low torque.

The smell or odour of the material was surprisingly low and reduced in comparison with kraft lignin and composite materials or crosslinked materials where the resin is based on kraft lignin that is not chemically modified the present composite material has a reduced odour. Comparison of odours can be estimated qualitatively by sensory evaluation or quantitatively according to ASTM E679 where a dilution factor is detected. A high dilution factor means the more odoriferous is the material.

### The method

Resin material according to the invention is prepared by mixing a di- or polyepoxide, lignin and preferably a catalyst. The mixing is done until a homogenous mixture is obtained and may be done by extruding, kneading or stirring, and may be done at room temperature (20°C) or higher. In one embodiment the mixing is done at 20-30°C for up to 30 minutes and then the temperature is raised to at least 60°C, preferably at least 100°C. This ensures a homogenous mixture. When preparing a composite material, the reinforcing agent may be added at any time prior to curing, however when using a combination of a fibrous and a non-fibrous reinforcing agent the non-fibrous is preferably first added and mixed prior to adding the fibrous. Better mixing and more homogenous composite material is obtained by adding the non-fibrous reinforcing agent prior to the fibrous.

Curing of the mixture is done at a curing temperature of at least 60°C, preferably at least 100°C, and preferably for at least 5 minutes. The time is dependent on the thickness of the sample or product being produced. A mold or form press is preferably used and the curing may be done at elevated pressure, such as at least 0.2 MPa. Elevated pressure during curing reduces gas bubble formation in the resin and increases the strength.

### EXAMPLES

### Example 1

The aim of the study was to see the effect on the flexural strength of the resin material when using different catalysts, curing time and curing temperature.

### Preparing of resin material

Epoxides used in this study: Ethylene glycol diglycidyl ether (EGDE), glycerol diglycidyl ether (GDE), neopentyl glycol diglycidyl ether (NGDE), resorcinol diglycidyl ether (RDE), bisphenol A diglycidyl ether (BADE) and epoxidized linseed oil (ELO).

Catalysts/crosslinking agents used in this study: 2,4,6-Tris(dimethylaminomethyl)phenol (TDAP), imidazole (Im), 4-(dimethylamino)pyridine (DMAP), tripotassium phosphate, potassium hydroxide.

Lignin: Kraft lignin obtained from soft wood black liquor using Lignoboost.

General procedure for resin preparation: Epoxide (6.67 g, 33wt%), optionally a catalyst (0.1-0.4 g) and dry Kraft Lignin (13.33 g) were mixed first at room temperature and then at 140 °C for 5-6 min. The resin was divided into pieces suitable for molds.

Curing was done in a Teflon mold with 6x 43x17x3.2 mm slots at temperatures of 160-200 °C for 10-120 minutes.

The cured samples were evaluated in a 3-point test apparatus, Table 1.

### Results

All of the samples had none or very little smell.

**Table 1. Lignin epoxide curing conditions and mechanical performance (33wt% epoxide). ^{a} Mean value of 5 samples. ^{b}40% GDE was used. ^{c}50% GDE was used.**

| Entry | Epoxide type | Catalyst type | Catalyst amount (Phr) | Curing temp. (°C) | Curing time (min) | Flexural strength^{a} (MPa) | STD dev.^{a} (MPa) |
|---|---|---|---|---|---|---|---|
| 1 | BADE | - | - | 180 | 120 | 54.2 | 0.9 |
| 2 | RDE | - | - | 180 | 120 | 30.8 | 8.2 |
| 3 | ELO | - | - | 180 | 120 | 15.4 | 2.8 |
| 4 | EGDE | - | - | 180 | 120 | 55.3 | 19.7 |
| 5 | NGDE | - | - | 180 | 120 | 21.8 | 9.2 |
| 6 | GDE | - | - | 180 | 120 | 45.7 | 8.0 |
| 7 | EGDE | - | - | 200 | 30 | 40.4 | 4.2 |
| 8 | EGDE | - | - | 200 | 20 | 9.8 | 3.0 |
| 9 | EGDE | - | - | 200 | 10 | 8.2 | 3.8 |
| 10 | GDE | - | - | 200 | 20 | 14.2 | 3.3 |
| 11 | EGDE | DMAP | 0.5 | 200 | 10 | 47.8 | 1.4 |
| 12 | EGDE | K₃PO₄ | 1.3 | 200 | 10 | 14.4 | 5.6 |
| 13 | EGDE | KOH | 2 | 200 | 10 | 14.0 | 3.4 |
| 14 | EGDE | TDAP | 0.5 | 200 | 20 | 22.3 | 8.7 |
| 15 | EGDE | TDAP | 1 | 200 | 20 | 15.0 | 6.3 |
| 16 | EGDE | Im | 0.5 | 200 | 20 | 20.7 | 6.1 |
| 17 | GDE | TDAP | 0.5 | 180 | 20 | 23.3 | 8.3 |
| 18 | GDE^{b} | TDAP | 0.5 | 180 | 20 | 33.6 | 14.0 |
| 19 | GDE^{c} | TDAP | 0.5 | 180 | 20 | 30.7 | 5.8 |

### Example 2

The aim of the study was to see the effect on the flexural strength of the composite material when using different fibres or fillers, catalysts, curing time and curing temperature.

### Preparing of composite

Compounds of the resin material were the same as in Example 1.

Fibres and fillers used in this study were jute, CTMP and Hammer Milled Hydrophobized CTMP (H-CTMP), wood, recycled cellulose and biochar.

General procedure for composite resin preparation: A catalyst (210 mg) was mixed with epoxide (13.93 g). Kraft lignin (27.86 g) was added and after thorough mixing biochar (15.00 g) was added. After mixing the contents were added to an internal mixer followed by addition of recycled cellulose (3.00 g). The temperature was increased to 90 °C and the composite resin was removed when internal temperature reached 90 °C.

Curing was done in a Teflon mold with 6x 43x17x3.2 mm slots at temperatures of 160-200 °C.

The cured samples were evaluated in a 3-point test apparatus, Table 2 and 3.

### Results

All of the samples had none or very little smell.

**Table 2. Lignin epoxide curing conditions and mechanical performance. ^{a}Catalyst amount is 0.5% with regard to amount of resin (lignin + epoxide). ^{b}Mean value of 5 samples.**

| Entry | Epoxide type | Cat. Type | Cat. Amount^{a} (%) | Fiber type | Fiber am. (%) | Curing temp. (°C) | Curing time (min) | Flex. Str.^{b} (MPa) | STD dev.^{b} (MPa) |
|---|---|---|---|---|---|---|---|---|---|
| 1 | EGDE | TDAP | 0.3 | Jute | 20 | 180 | 20 | 68.1 | 4.5 |
| 2 | EGDE | TDAP | 0.3 | Jute | 30 | 180 | 20 | 37.0 | 4.0 |
| 3 | EGDE | TDAP | 0.3 | CTMP | 20 | 180 | 20 | 51.9 | 0.2 |
| 4 | EGDE | TDAP | 0.3 | H-CTMP | 20 | 180 | 20 | 68.8 | 3.0 |
| 5 | GDE | TDAP | 0.3 | Jute | 20 | 180 | 20 | 44.8 | 3.2 |
| 6 | EGDE | TDAP | 0.5 | - | - | 200 | 20 | 22.3 | 8.7 |
| 7 | GDE | TDAP | 0.5 | - | - | 180 | 20 | 11.3 | 5.7 |

**Table 3. Lignin epoxide curing conditions and mechanical performance for composite of GDE catalyzed by TDAP. Catalyst amount is 0.5% with regard to amount of resin and 0.3% of the total weight.**

| Entry | Reinforcing agent type | Reinforcing agent amount (%) | Curing temp. (°C) | Curing time (min) | Flexural str. (MPa) | STD dev. (MPa) |
|---|---|---|---|---|---|---|
| 1 | Wood | 20 | 180 | 10 | 25.8 | 1.5 |
| 2 | Recycled cellulose | 20 | 180 | 20 | 35.7 | 6.5 |
| 3 | Biochar | 20 | 180 | 20 | 38.4 | 3.2 |
| 4 | Recycled cellulose:Biochar | 10:25 | 180 | 20 | 43.5 | 4.7 |

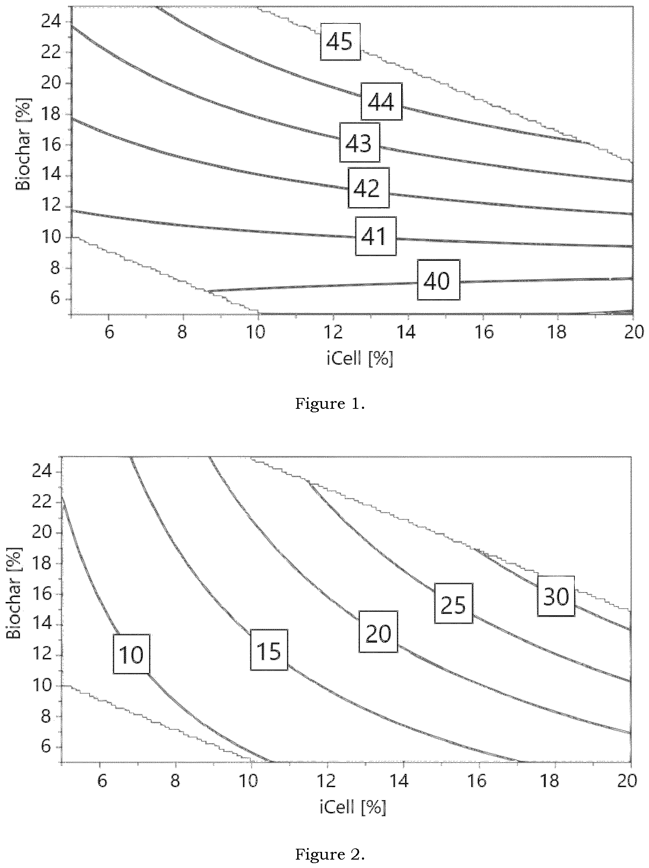

A plot of flexural strength and final torque during mixing against concentrations of recycled cellulose and biochar revealed that highest strength is obtained when the amount of fiber is more than 10wt% and the amount of non-fiber (biochar) is more than 20wt% (Figure 1). It is also seen that using less than 15wt% of fibrous and less than 40% of non-fibrous results in satisfactory level of torque, Figure 2.

## Claims

1. A resin material obtainable by
a. Mixing lignin, a di- or polyepoxide compound and preferably a catalyst to prepare a mixture, and
b. Curing the mixture at a curing temperature of at least 60°C.

2. The resin material according to claim 1 wherein the lignin is kraft lignin.

3. The resin material according to claim 1 or 2 wherein the diepoxide is selected from ethylene glycol diglycidyl ether (EGDE), glycerol diglycidyl ether (GDE), neopentyl glycol diglycidyl ether (NGDE), resorcinol diglycidyl ether (RDE), bisphenol A diglycidyl ether (BADE) and epoxidized linseed oil (ELO).

4. The resin material according to any one of the preceding claims wherein the amount the di- or polyepoxide is 30-60wt%, preferably 31-45wt% of the total weight of the resin.

5. The resin material according to any one of the preceding claims wherein the catalyst is selected from 2,4,6-Tris(dimethylaminomethyl)phenol (TDAP), imidazole (Im), 4-(dimethylamino)pyridine (DMAP), tripotassium phosphate, triethylenetetramine, diethylenetriamine, 1,2-Bis(3-aminopropylamino)ethane, piperazine, KOH, NaOH and KAlO₂.

6. The resin material according to any one of the preceding claims wherein the amount of catalyst is 0.1 to 1.5wt%, preferably 0.2 to 0.7 wt%, more preferably 0.3wt% of the total resin material.

7. A composite material comprising a resin material according to any one of claim 1 to 6 and reinforcing agent, wherein the amount of reinforcing agent is 10-50wt% of the total weight of the composite material.

8. The composite material according to claim 7 wherein the reinforcing agent is a fibrous reinforcing agent selected from wood fibre, cellulose, carbon fibre or glass fibre or a mixture of two or more thereof, wherein the cellulose preferably is chemo-thermomechanical pulp (CTMP), recycled cellulose or hydrophobized CTMP (H-CTMP).

9. The composite material according to claim 7 wherein the reinforcing agent is a non-fibrous reinforcing agent selected from biochar, carbon black, calcium carbonate and a combination thereof.

10. The composite material according to claim 7 wherein the reinforcing agent is a mixture of recycled cellulose and biochar, preferably wherein the amount of recycled cellulose is 10-15wt% and the amount of biochar is 20-40wt% of the total weight of the composite material.

11. The composite material according to claim 8 wherein the reinforcing agent is jute, CTMP or H-CTMP and wherein the total amount of reinforcing agent is 18-25wt%, preferably 20wt%.

12. The composite material according to any one of claim 7 to 11 wherein the lignin in the resin is kraft lignin and wherein the composite material has a reduced odour in comparison with kraft lignin and in comparison with materials containing fatty acid esterified lignin or lignin crosslinked with triglyceride, wherein the odour is determined according to ASTM E679 .

13. The composite material according to any one of claim 7 to 11 wherein the lignin in the resin is kraft lignin and wherein a dilution level for odour detection in a bag at 40°C is equal to or less than 1500 as determined according to ASTM E679, preferably equal to or less than 1200, preferably equal to or less than 1000, preferably equal to or less than 800, preferably equal to or less than 600, more preferably equal to or less than 400.

14. A method of preparing the composite material according to any one of claim 7 to 13 wherein the method comprises:
a. Mixing lignin, a di- or polyepoxide compound, reinforcing agent and optionally a catalyst to prepare a mixture, and
b. Curing the mixture at a curing temperature of at least 60°C, preferably at least 100°C.

15. The method according to claim 14 wherein the reinforcing agent is a combination of fibrous and non-fibrous reinforcing agents and wherein the non-fibrous reinforcing agent is mixed with the lignin and the di- or polyepoxide and optionally a catalyst to obtain a pre-mixture and whereafter the fibrous reinforcing agent is mixed with the first mixture to obtain the mixture.
